# EUROPÄISCHE PATENTSCHRIFT

(11) **EP 0 794 826 B1**
(45) Veröffentlichungstag und Bekanntmachung des Hinweises auf die Patenterteilung: **29.07.1998**
(21) Anmeldenummer: 95938349.8
(22) Anmeldetag: 28.11.1995
(51) Int. Cl.: B01D 53/94, B01J 21/12, B01J 21/16

(54) **VERFAHREN UND KATALYSATOR ZUR ZERSETZUNG VON STICKOXIDEN**
NITROGEN OXIDE DECOMPOSING PROCESS AND CATALYST
PROCEDE ET CATALYSEUR DE DECOMPOSITION D'OXYDES D'AZOTE

(30) Priorität: 28.11.1994 DE 4442012
(43) Veröffentlichungstag der Anmeldung: 17.09.1997
(73) Patentinhaber: SIEMENS AKTIENGESELLSCHAFT, 80333 München (DE)
(72) Erfinder: HUMS, Erich, D-91093 Hessdorf (DE)
(86) Internationale Anmeldenummer: DE9501681
(87) Internationale Veröffentlichungsnummer: WO9616723

(56) Entgegenhaltungen:
- DE-A- 3 636 546
- DE-A- 4 317 581
- US-A- 4 497 903
- US-A- 4 720 476
- US-A- 4 722 918
- US-A- 4 734 391
- US-A- 4 774 213
- US-A- 4 792 439
- DATABASE WPI Week 8201 Derwent Publications Ltd., London, GB; AN 82-00473E & JP,A,56 152 741 (GOSEI KAGAKU KENKYU) , 26.November 1981
- DATABASE WPI Section Ch, Week 9310 Derwent Publications Ltd., London, GB; Class E19, AN 93-079585 & JP,A,05 023 544 ( AGENCY OF IND SCI & TECHNOLOGY) , 2.Februar 1993

## Beschreibung

Die Erfindung bezieht sich auf ein Verfahren und einen Katalysator zur reduktionsmittelfreien von Stickoxiden,insbesondere von NO, NO₂ und N₂O, in einem strömungsmedium, beispielsweise dem Abgas eines Verbrennungsmotors oder dem Rauchgas einer Verbrennungsanlage.

Stickoxide entstehen im wesentlichen, wenn bei Temperaturen weit über 600 °C, etwa bei der Verbrennung, Sauerstoff und Stickstoff miteinander in Berührung kommen. Dabei entstehen vorwiegend N₂O und NO sowie geringe Anteile NO₂ und NO₃. Weil die Emission von Stickoxiden durch Emissionsgesetze in einzelnen Ländern strengen Grenzwerten unterworfen ist, werden primäre und sekundäre Maßnahmen angewendet, um den Gehalt an Stickoxiden in Abgas oder Rauchgas zu begrenzen.

Unter primären Maßnahmen versteht man solche Maßnahmen, bei denen die Entstehung von Stickoxiden unterbunden werden soll. Hierzu zahlt beispielsweise der Betrieb von Verbrennungsanlagen mit reinem Sauerstoff oder die Herabsetzung der Flammtemperatur durch Zumischung von Verbrennungsabgasen und anderen inerten Gasen, wie z.B. Wasserdampf, zum Brenngas.

Unter sekundären Maßnahmen werden Maßnahmen verstanden, bei denen die im Strömungsmedium enthaltenen Stickoxide verringert werden. Hierzu zählen Maßnahmen, wie das Auswaschen der Stickoxide aus dem Rauchgas oder die Reduktion der Stickoxide nach dem Verfahren der selektiven katalytischen Reduktion (SCR-Verfahren). Bei dem letztgenannten Verfahren wird dem Rauchgas ein Reduktionsmittel, vorzugsweise Ammoniak oder eine Ammoniak freisetzende Substanz, wie z.B. Harnstoff, zugesetzt, wobei die Stickoxide durch Kontaktierung zusammen mit Reduktionsmittel an einem selektiven Katalysator zu Stickstoff und Wasser umgesetzt. Als Katalysator wird dabei meist Titandioxid mit Zusätzen von Vanadiumoxid und/oder Molybänoxid und/oder Wolframoxid, oder ternäre und/oder quatinäre Mischoxide von Titan, Vanadium, Molybdän und Wolfram verwendet.

Derzeit hat sich das SCR-Verfahren weltweit durchgesetzt. Es hat wegen der Verwendung von Ammoniak als Reduktionsmittel jedoch den Nachteil, daß eine im allgemeinen aufwendige Regelungstechnik erforderlich ist, um den stochiometrischen Bedarf an Ammoniak exakt dem jeweiligen Stickoxidgehalt des Abgases anzupassen.

Des weiteren ist es bekannt, daß Stickoxide, insbesondere NO und N₂O, ohne Einsatz von Reduktionsmitteln katalytisch zersetzt werden können. So ist es beispielsweise in der DE-A- 43 17 581 vorgeschlagen worden, die Stickoxide bei einer Temperatur zwischen 100 und 800 °C mit einem Katalysator zu kontaktieren, der als katalytisch aktive Komponente im wesentlichen ein Aluminiumsilikat mit Drei-Schicht-Struktur enthält. Mit einem solchen Katalysator können Umsatzraten im Bereich von 60 % erreicht werden. Im Bezug zu den mit dem SCR-Verfahren erreichbaren Umsatzraten, die im Bereich von 90 % liegen, sind die mit reduktionsmittelfreiarbeitenden Katalysatoren erreichbaren Umsatzraten derzeit noch vergleichsweise niedrig.

Der Erfindung liegt daher die Aufgabe zugrunde, ein Verfahren und einen Katalysator zur reduktionsmittelfreien Zersetzung von Stickoxiden anzugeben, mit denen die Zersetzung von Stickoxiden in Abgas oder Rauchgas verbessert werden kann, um den Einsatz von Reduktionsmitteln bei der Minderung von Stickoxiden in Abgas oder Rauchgas, wie er beispielsweise beim SCR-Verfahren erforderlich ist, überflüssig zu machen.

Bezüglich des Verfahrens wird diese Aufgabe erfindungsgemäß dadurch gelost, daß die Stickoxide bei einer Temperatur zwischen 100 und 800 ° C mit einem Katalysator kontaktiert werden, der als katalytisch aktive Komponente im wesentlichen ein Aluminiumsilikat mit Schichtstruktur, insbesondere einen Glimmer, umfaßt, wobei in das Silikatgitter Übergangsmetallionen, vorzugsweise Lanthan und/oder Cer, integriert sind.

Bezüglich des Katalysators wird diese Aufgabe erfindungsgemäß dadurch gelost, daß die katalytisch aktive Komponente im wesentlichen ein Aluminiumsilikat mit Schichtstruktur ohne Aluminium- und/oder Zirkonoxidbrücken zwischen den Schichten insbesondere einen Glimmer, umfaßt, wobei in das Silikatgitter als Übergangsmetallionen Lanthan oder Lanthan und Cer, eingebaut sind.

Hierbei ist unter dem Einbau von Übergangsmetallionen eine Substitution jener Baugruppen verstanden, die über Sauerstoffbrücken mit einem Aluminiumatom verbunden sind. Weiter wird darunter der Austausch von Metall-Kationen-Komplexen verstanden. Mit einem derart mit Übergangsmetallionen substituierten und/oder ausgetauschten Aluminiumsilikat mit Schichcstruktur können Umsatzraten in Höhe von etwa 70 % erreicht werden. Damit nähern sich diese Umsatzraten zunehmend an die mit dem SCR-Verfahren erreichbaren Umsatzraten an. Gleichzeitig werden aber die mit dem beim SCR-Verfahren notwendigen Einsatz von Reduktionsmittel verbundene Nachteile, wie z.B. die Kosten des Reduktionsmittels, die Kosten für die zugehörige Lagerausstattung und die aufwendige Regelungstechnik, vermieden werden.

In besonders vorteilhafter Ausgestaltung der Erfindung kann der Anteil des Aluminiumsilikats mit Schichtstrukturen zwischen 50 und 100 Gew.-%, vorzugsweise zwischen 95 und 96 Gew.-%, betragen. Im besonderen durch diesen vergleichsweise hohen Anteil des Aluminiumsilikats am Katalysator werden hohe Umsatzraten bei der Stickoxidumsetzung erreicht.

In vorteilhafter Ausgestaltung der Erfindung können einer oder mehrere der Zuschlagstoffe Titandioxid TiO₂, Magnesiumoxid MgO, Siliziumdioxid SiO₂, Fasermaterial, Tonmineral, Dispergierhilfsmittel und Filmbildehilfsmittel vorgesehen sein. Weiter kann das Aluminumsilikat mit Schichtstruktur und gegebenenfalls einer oder mehrere der Zuschlagstoffe auf einem oxidischen Träger, insbesondere Magnesiumoxid, Titandioxid, Siliziumdioxid, aufgebracht sein. Alternativ kann das Alumiumsilikat mit Schichtstruktur und gegebenenfalls einer oder mehrere der Zuschlagstoffe auf einem metallischen Träger, insbesondere auf perforiertem Stahlblech, Streckmetall, metallischem Flechtwerk, vorzugsweise aus Edelstahl, aufgebracht sein. Auf diese Weise ist es möglich, das Aluminiumsilikat mit Schichtstruktur sowohl zu Wabenkatalysatoren, was im besonderen mit dem Aufbringen auf eine oxidischen Träger gemeint ist, als auch zu Plattenkatalysatoren verarbeitet werden. Solche Katalysatoren eignen sich besonders zur Umsetzung der in Rauchgas einer Verbrennungsanlage enthaltenen Stickoxide.

Ausführungsbeispiele der Erfindung werden anhand von zwei Figuren näher erläutert. Es zeigen:
- FIG 1: ein Flußdiagramm des Herstellungsverfahrens eines Katalysators für die Rauchgasreinigung in einem Kraftwerk, und
- FIG 2: die Umsatzrate eines gemäß dem Flußdiagramm von FIG 1 hergestellten Katalysators in Abhängigkeit von der Rauchgastemperatur.

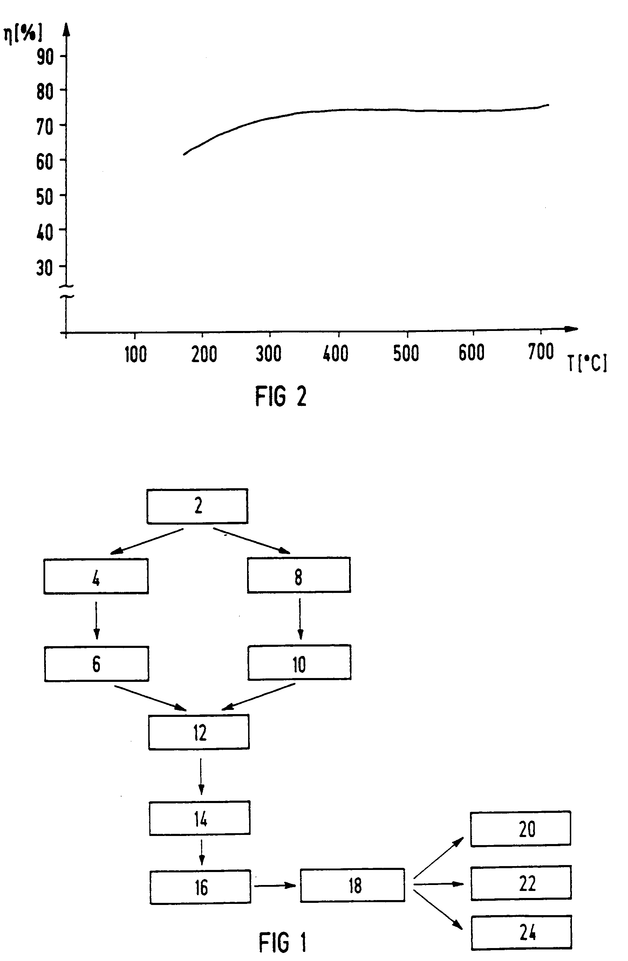

Bei der Herstellung des Katalysators der als katalytisch aktive Komponente ein Aluminiumsilikat mit Schichtstruktur umfaßt, ist grundsätzlich zwischen dem Austausch von durch Vander-Waal'sche-Kräfte gebundenen Metallkomplexen und der Substitution von kovalent gebundenen Metallkationen zu unterscheiden. Gemäß FIG 1 wird in einem ersten Verfahrensschritt 2 beispielsweise ein Vermiculit, insbesondere ein durch Verwitterung von Biotit entstandener Vermiculit, vorbereitet, um anschließend in einem Verfahrensschritt 4 in einer stark sauren Suspension oder in einem Verfahrensschritt 8 in einer stark alkalischen Suspension fortzuliegen. Die Substitution der beim Vermiculit relativ stark an das Kristallgitter gebundenen Magnesiumkationen vollzieht sich in Abhängigkeit von dem Substitutionsatom in der stark sauren Suspension oder der stark alkalischen Suspension. Um beispielsweise das Magnesium gegen Cer zu substituieren, wird der Vermiculit in einem Verfahrensschritt 6 in der stark sauren Suspension mit Lösungen von vierwertigen Cer-Salzen , wie z.B. Cer-Ammoniumnitrat oder Cer-Oxid oder Cer-Sulfat, oder mit Lösungen von dreiwertigen Cer-Salzen, wie z.B. Cer-Chlorid oder Cer-Nitrat, versetzt. Das Auslaugen des Magnesiums aus dem Vermiculit kann beispielsweise in diesem Verfahrensschritt 6 mit starken anorganischen Säuren, wie z.B. Salpetersäure HNO₃, erfolgen. Hierbei ist es wichtig, daß der Auslaugevorgang nicht zu einer Strukturveränderung des Silikatgerüstes des Vermiculit führt. Als zusätzliches Substitutionsatom mit besonders guten katalytischen Eigenschaften hinsichtlich der Umsetzung von Stickoxiden wird Lanthan verwendet. Dies wird zusüzlich zu den Lösungen der Cer-Salze in dem Verfahrensschritt in Form von Lanthannitrat La(NO₃)₃·6H₂O oder auch in Form Lanthansulfat La₂(SO₄)₃·9H₂O in die stark saure Suspension eingebracht.

Das Ende der Reaktion, also eine ausreichend Substitution des Magnesiums durch die genannten Metallkationen Cer und Lanthan, kann durch Röntgenbeugung festgestellt werden. Diese Substitution wird im allgemeinen bei Temperaturen zwischen 40 und 90 °C vorgenommen.

Die im Vermiculit enthaltenen oktaedrischen Hydroxomagnesiumkomplexe werden in sauren wässrigen Suspensionen gegen solche Komplexe des Lanthans oder des Lanthans und Cers. Diese Komplexe zeichnen sich durch eine besonders hohe katalytische Aktivität bezüglich der Umsetzung von Stickoxiden aus. Hierzu werden in einem Verfahrensschritt 12 diese Metalle in Form von Salzen, wie z.B. Oxohydraten oder Nitraten, in die saure oder alkalische Suspension gegeben. Der Verlauf dieses Austausches kann anhand der bekannten Austauschisothermen verfolgt werden. Im Fall des Vermiculit hängt die Geschwindigkeit dieses Austausches im wesentlichen von dem Affinitätsüberschuß des Austauschkations in Vergleich zu dem auszutauschenden Kation, hier also Magnesium, ab.

Es ist festzuhalten, daß eine Austauschreaktion mit Metallen in Form von Salzen und/oder eine Substitutionsreaktion mit Lanthankationen oder Lanthan- und Cerkationen bedarfsweise in saurer Suspension oder in alkalischer Suspension stattfindet. Nach Abschluß der Austauschreaktion und/oder der Substitutionsreaktion wird der so erhaltene Vermiculit in einem Verfahrensschritt 14 bei etwa 150 °C getrocknet und anschließend in einem Verfahrensschritt 16 bei einer Temperatur zwischen 400 und 500 °C einige Stunden kalziniert. Anschließend wird das auf diese Weise gewonnene ausgetauschte und/oder substituierte Aluminiumsilikat mit DreiSchicht-Struktur, hier Vermiculit, in einem Verfahrensschritt 18 aufgemahlen und mit Zusatzstoffen versetzt und anschließend in einem Verfahrensschritt 20 auf einen oxidischen Träger, wie z.B. Magnesiumoxid, Titandioxid oder Siliziumdioxid, aufgebracht. Ebenso kann das auf diese Weise gewonnene Aluminiumsilikat mit Drei-Schicht-Struktur in einem Verfahrensschritt 22 auch mit Filmbildehilfsmittel, Dispergierhilfsmitteln, Porenbildnern und Titandioxid als oxidischen Trägermaterial versetzt, vermischt und zu Katalysatorwaben extrudiert werden. Alternativ dazu ist es auch möglich, das so gewonnene Aluminiumsilikat mit Drei-Schicht-Struktur in einem Verfahrensschritt 24 auf einen metallischen Trager, wie z.B. auf ein perforiertes Stahlblech, Streckmetall oder metallisches Flechtwerk, vorzugsweise aus Edelstahl, aufzubringen. Den Verfahrensschritt 20 - 24 ist gemeinsam, das nach Abschluß dieses Verfahrensschritts der Anteil des Aluminiumsilikats mit Drei-Schicht-Struktur zwischen 50 und 100 Gew.-%, bezogen auf das Gewicht des Katalysators, vorliegt.

Diesen drei alternativen Katalysatorprodukten ist gemeinsam, daß die an diesen Katalysatoren kontaktierten Stickoxid ohne ein in ein stickoxidhaltiges Strömungsmedium eingebrachtes Reduktionsmittel katalytisch zu Stickstoff und Sauerstoff umgesetzt werden.

In FIG 2 wird anhand eines Diagramms der typische Verlauf der katalytischen Umsatzrate η in Abhängigkeit von der Temperatur T gezeigt. Zugrunde liegen hier die Messung an einem Vermiculit-Katalysator, der auf die oben beschriebene Weise hergestellt worden ist und Lanthan- und Cer-Kationen enthalt. Der FIG 2 ist zu entnehmen, daß die katalytische Umsatzrate η zwischen 200 und 600 °C nur geringfügig mit der Temperatur T ansteigt. Als Verbesserung gegenüber dem Stand der Technik ergibt sich aus FIG 2, daß mit diesem reduktionsmittelfrei arbeitenden Katalysator Umsatzraten für Stickoxide, insbesondere für NO und für N₂O, von etwa 70 % und mehr zu erreichen sind.

Die gezeigte Meßkurve wurde dabei im einzelnen bei folgenden Bedingungen aufgenommen: Das Testgasgemiscn beinhaltere eingangsseitig 450 ppmNO, 15 Vol.-% Kohlendioxid und 40 Vol.-% Sauerstoff und wurde min Stickstoff zu 100 % ergänzt. Der Druck des Testgases betrug 1 bar und die Betriebsgeschwindigkeit im Katalysator 10.000 pro Stunde.

Es hat sich weiter gezeigt, daß neben dem Vermiculic als Aluminiumsilikat mit Drei-Schicht-Struktur auch Phlogopit, Moskovit, Pyrophylit, Saponit, Batavit, Montmorillonit und Biotit verwendet werden kann.

## Patentansprüche

1. Verfahren zur reduktionsmittelfreien Zersetzung von in einem Strömungsmedium, enthaltenen Stickoxiden, bei dem die Stickoxide bei einer Temperatur zwischen 100 und 800 °C mit einem Katalysator kontaktiert werden, der als katalytisch aktive Komponente im wesentlichen ein Aluminiumsilikat mit Schichtstruktur, insbesondere einen Glimmer, umfaßt, wobei in das Silikatgitter Übergangsmetallionen, vorzugsweise Lanthan und/oder Cer, eingebaut sind.

2. Katalysator zur reduktionsmittelfreien Zersetzung von Stickoxiden, wobei die katalytisch aktive Komponente im wesentlichen ein Aluminiumsilikat mit Schichtstruktur ohne Aluminium- und/oder Zirkonoxidbrücken zwischen den Schichten, insbesondere einen Glimmer, umfaßt, wobei in das Silikatgitter als Übergangsmetallionen Lanthan oder lanthan und Cer, eingebaut sind.

3. Katalysator nach Anspruch 2,
**dadurch gekennzeichnet,** dar der Anteil des Aluminiumsilikats mit Schichtstruktur bis zu 100 Gew.-%, vorzugsweise 95 bis 96 Gew.-%, beträgt.

4. Katalysator nach Anspruch 3,
**dadurch gekennzeichnet,** daß einer oder mehrere der Zuschlagstoffe Titandioxid TiO₂, Magnesiumoxid MgO, Siliziumoxid SiO₂, Fasermaterial, Tonmineral, Dispergierhilfsmittel und Filmbildehilfsmittel vorgesehen sind.

5. Katalysator nach einem der Ansprüche 2 bis 4,
**dadurch gekennzeichnet,** daß das Aluminiumsilikat mit Schichtstruktur und ggf. einer oder mehrers der Zuschlagstoffe auf einem oxidischen Träger, insbesondere Magnesiumoxid MgO, Titandioxid TiO₂ und Siliziumdioxid SiO₂, aufgebracht ist.

6. Katalysator nach einem der Ansprüche 2 bis 4,
**dadurch gekennzeichnet,** daß das Aluminiumsilikat mit Schichtstruktur und ggf. einer oder mehrere der Zuschlagstoffe auf einem metallischen Träger, insbesondere auf perforiertem Stahlblech, Streckmetall, metallisches Flechtwerk, vorzugsweise aus Edelstahl, aufgebracht ist.

## Claims

1. A method for reducing-agent-free decomposition of nitrogen oxides contained in a flow medium, in which the nitrogen oxides, at a temperature of between 100 and 800°C, are brought into contact with a catalyst which comprises as its catalytically active component substantially an aluminium silicate with a layered structure, in particular a mica, wherein transition-metal ions, preferably lanthanum and/or cerium, are incorporated into the silicate lattice.

2. A catalyst for reducing-agent-free decomposition of nitrogen oxides, wherein the catalytically active component substantially comprises an aluminium silicate with a layered structure without aluminium and/or zircon oxide bridges between the layers, in particular a mica, wherein lanthanum or lanthanum and cerium are incorporated into the silicate lattice as transition-metal ions.

3. A catalyst according to claim 2, characterised in that the proportion of aluminium silicate with layered structure may amount to up to 100 wt.%, and preferably 95 to 96 wt.%.

4. A catalyst according to claim 3, characterised in that one or more of the auxiliary substances titanium - dioxide TiO₂, magnesium oxide MgO, silicon dioxide SiO₂, fibrous material, clay mineral, dispersing agent and film forming agent may be provided.

5. A catalyst according to any one of claims 2 to 4, characterised in that the aluminium silicate with layered structure and optionally one or more of the auxiliary substances is applied to an oxide support, in particular magnesium oxide MgO, titanium dioxide TiO₂ and silicon dioxide SiO₂.

6. A catalyst according to any one of claims 2 to 4, characterised in that the aluminium silicate with layered structure and optionally one or more of the auxiliary substances is applied to a mental support, in particular perforated sheet steel, expanded metal or metal trelliswork, preferably of special steel.

## Revendications

1. Procédé de décomposition sans agent réducteur d'oxydes d'azote contenus dans un fluide en écoulement, qui consiste à mettre les oxydes d'azote en contact à une température comprise entre 100 et 800°C avec un catalyseur qui renferme comme constituant catalytiquement actif essentiellement un silicate d'aluminium à structure lamellaire, notamment un mica, des ions d'un métal de transition, de préférence de lanthane et/ou de cérium, étant insérés dans le réseau de silicate.

2. Catalyseur de décompositon sans agent réducteur d'oxydes d'azote, le constituant catalytiquement actif renfermant essentiellement un silicate d'aluminium à structure lamellaire sans ponts d'oxyde d'aluminium et/ou d'oxyde de zirconium entre les lamelles, notamment un mica, du lanthane ou du lanthane et du cérium étant insérés en tant qu'ions de métal de transition dans le réseau de silicate.

3. Catalyseur suivant la revendication 2,
caractérisé en ce que la proportion du silicate d'aluminium à structure lamellaire représente jusqu'à 100% en poids, de préférence de 95 à 96% en poids.

4. Catalyseur suivant la revendication 3,
caractérisé en ce qu'il est prévu un ou plusieurs des additifs que sont le dioxyde de titane TiO₂, l'oxyde de magnésium MgO, l'oxyde de silicium SiO₂, de la matière fibreuse, de l'argile minérale, un adjuvant de dispersion et un adjuvant filmogène.

5. Catalyseur suivant l'une des revendications 2 à 4,
caractérisé en ce que le silicate d'aluminium à structure lamellaire et, le cas échéant, un ou plusieurs des additifs sont déposés sur un support oxydé, notamment de l'oxyde de magnésium MgO, du dioxyde de titane TiO₂ et du dioxyde de silicium SiO₂.

6. Catalyseur suivant l'une des revendications 2 à 4,
caractérisé en ce que le silicate d'aluminium à structure lamellaire et. le cas échéant, un ou plusieurs des additifs sont déposés sur un support metallique notamment sur de la tôle d'acier perforée₁ du métal déployé. du treillis métallique, de préférence en acier fin.
